# EUROPÄISCHE PATENTANMELDUNG

(11) **EP 1 873 929 A1**
(43) Veröffentlichungstag der Anmeldung: **02.01.2008**
(21) Anmeldenummer: 06013610.8
(22) Anmeldetag: 30.06.2006
(51) Int. Cl.: H04B 7/04, H04B 7/02, H04L 1/06, H04L 12/28, H04L 12/56

(54) **Verfahren zum Übertragen von Daten in einem Kommunikationssystem, Kommunikationssystem und Endgerät**

(71) Anmelder: SIEMENS AKTIENGESELLSCHAFT, 80333 München (DE)
(72) Erfinder: Krause, Wolfram, 09648 Mittweida (DE); Szabo, Andrei, 85521 Riemerling (DE)

(57) **Zusammenfassung**

Die Erfindung beschreibt ein Verfahren zum Übertragen von Daten zwischen einem ersten Teilnehmer (BS) und einem zweiten Teilnehmer (EG) in einem Kommunikationssystem, wobei der erste Teilnehmer (BS) zumindest eine Antenne aufweist, die mit einer ersten Verarbeitungseinheit gekoppelt ist, und der zweite Teilnehmer (EG) zumindest eine Antenne aufweist, die mit einer zweiten Verarbeitungseinheit gekoppelt ist. Das erfindungsgemäße Kommunikationssystem ist dazu ausgebildet, zumindest einen Teil der zu übertragenden Daten über einen ersten Kommunikationspfad gemäß einem ersten Datenübertragungsverfahren zu übertragen, welcher direkt zwischen dem ersten Teilnehmer (BS) und dem zweiten Teilnehmer (EG) verläuft. Weiterhin wird zumindest ein Teil der zu übertragenden Daten über zumindest einen zweiten Kommunikationspfad gemäß einem ersten und einem zweiten Datenübertragungsverfahren übertragen, wobei der zweite Kommunikationspfad einen, zwischen dem ersten Teilnehmer (BS) und dem zweiten Teilnehmer (EG), zwischengeschalteten dritten Teilnehmer (VGi) umfasst, wobei der dritte Teilnehmer (VGi) zumindest eine Antenne aufweist. Der zweite Teilnehmer (EG) und der zumindest eine dritte Teilnehmer (VGi) schließen sich zu einem Antennenverbund in dem Kommunikationssystem zusammen, wobei die zweite Verarbeitungseinheit des zweiten Teilnehmers (EG) eine gemeinsame zweite Verarbeitungseinheit des Antennenverbunds bildet. Das erste Datenübertragungsverfahren und das zweite Datenübertragungsverfahren werden unterschiedlich gewählt.

## Beschreibung

Die Erfindung betrifft ein Verfahren zum Übertragen von Daten zwischen einem ersten Teilnehmer und einem zweiten Teilnehmer in einem Kommunikationssystem, ein Kommunikationssystem sowie ein Endgerät.

Mit MIMO (Multiple Input Multiple Output) werden in der Nachrichtentechnik drahtlose Kommunikationssysteme mit einem Sender und einem Empfänger bezeichnet, die jeweils über mehrere Sende- und Empfangsantennen verfügen. Bei einem solchen Kommunikationssystem lassen sich spezielle Kodierungsverfahren durchführen, die nicht nur die zeitliche, sondern auch die räumliche Dimension zur Informationsübertragung nutzen. Hierdurch lassen sich die Qualität (Bitfehlerhäufigkeit) und die Datenrate einer drahtlosen Verbindung deutlich erhöhen. Kommunikationssysteme nach dem MIMO-Prinzip können deshalb wesentlich mehr Bit/s pro genutztem Hz an Bandbreite übertragen und haben somit eine höhere spektrale Effizienz als andere Kommunikationssysteme.

Daneben sind sog. SIMO (Single Input Multiple Output)- und MISO (Multiple Input Single Output)-Kommunikationssysteme bekannt, bei denen der Empfänger bzw. der Sender über mehrere Antennen verfügt, die an eine gemeinsame Verarbeitungseinheit angeschlossen sind. Auch bei diesen Kommunikationssystemen kann über die Mehrzahl an räumlich verteilten Antennen des Empfängers bzw. des Senders ein verbessertes Übertragungsverhalten erzielt werden.

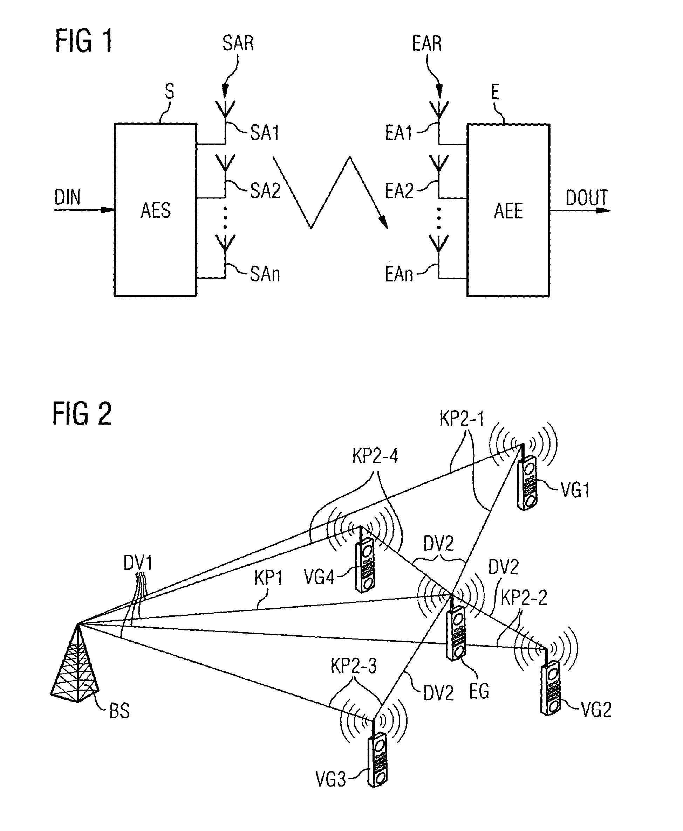

Fig. 1 zeigt ein aus dem Stand der Technik bekanntes MIMO-Kommunikationssystem in einer prinzipiellen Darstellung. Das Kommunikationssystem umfasst einen Sender S und einen Empfänger E. Der Sender S weist einen Sender-Antennenverbund SAR auf, der auch als Antennenarray bezeichnet wird. Der Sender-Antennenverbund umfasst in bekannter Weise eine Anzahl n an Sender-Antennen SA1, SA2, SAn. In entsprechender Weise umfasst der Empfänger E einen Empfänger-Antennenverbund EAR, welcher eine Mehrzahl an Empfänger-Antennen EA1, EA2, EAn aufweist. Sowohl dem Sender-Antennenverbund SAR als auch dem Empfänger-Antennenverbund EAR ist jeweils eine gemeinsame oder zentrale Sender-Verarbeitungseinheit AES bzw. Empfänger-Verarbeitungseinheit AEE zugeordnet. Daten werden der Sender-verarbeitungseinheit AES als Eingangsdaten DIN zugeführt, durch die Sender-Verarbeitungseinheit AES verarbeitet und über dem Sender-Antenneverbund SAR an den Empfänger E übertragen. Die übertragenen Daten werden durch den Empfänger-Antennenverbund EAR aufgenommen und gemeinsam einer zentralen Empfänger-Verarbeitungseinheit AEE zur Weiterverarbeitung zugeführt. Ergebnis der Weiterverarbeitung sind Ausgangsdaten DOUT.

Die Verwendung von mehreren Antennen bei einem Teilnehmer des Kommunikationssystems erfordert eine intelligente, nachgeschaltete und zentrale Signalverarbeitung, die die empfangenen Signale zusammensetzt. Insbesondere in Mobilfunksystemen nach dem GSM-Standard (GSM = Global System for Mobile Communication) ist die Verwendung mehrerer Antennen auf der Seite der Basisstation häufig anzutreffen. Mehrere Antennen können mehr Energie aus dem elektromagnetischen Feld entnehmen als eine einzelne Antenne. Dies wird als Gruppengewinn bezeichnet.

Reflexionen auf dem Ausbreitungsweg verursachen eine Mehrwegeausbreitung, die durch Interferenz beim Empfänger zu einer Signalauslöschung (im Fachjargon als "Fading" bezeichnet) führen kann. Bei mehreren räumlich getrennten Empfangsantennen in einer Umgebung mit starker Mehrwegeausbreitung ist das Fading an den einzelnen Antennen statistisch unabhängig. Die Wahrscheinlichkeit, dass alle Antennen gleichzeitig von Fading betroffen sind, ist sehr gering. Dieser Effekt wird als räumliche Diversität oder "Spatial Diversity" bezeichnet und führt zu einem sog. Diversitätsgewinn, der mit der Anzahl der Antennen wächst.

Bei einem MIMO-Kommunikationssystem mit n Sendeantennen und m Empfangsantennen ergeben sich n • m mögliche Kanäle. Diese unterschiedlichen Kanäle können zur gleichen Zeit bei derselben Frequenz genutzt werden, die Sendeleistung wird auf die Antennen aufgeteilt. Ein Bitstrom kann damit in separate Bitströme aufgeteilt werden, die parallel übertragen werden. Auf der Empfängerseite empfängt jede Antenne ein Summensignal der Sendeantennen. Um den Bitstrom zu dekodieren und wieder zusammenzusetzen, muss ein Gleichungssystem mit einer Anzahl an Unbekannten gelöst werden, was nur möglich ist, wenn die einzelnen Kanäle sehr unterschiedlich sind. Ist diese Bedingung erfüllt, kann das Kommunikationssystem innerhalb der gleichen Zeit eine mehrfache Menge an Daten übertragen, ohne zusätzliche Bandbreite zu benötigen. Man erzielt damit einen Gewinn durch den sog. Raummultiplex, der auch als "Spatial Multiplexung" bezeichnet wird.

Während bei einer Basisstation eines Kommunikationssystems die Anbringung mehrerer, räumlich voneinander separierter Antennen ohne Weiteres möglich ist, besteht insbesondere bei mobilen Endgeräten, wie z.B. einem Mobilfunktelefon, einem PDA (Personal Digital Assistant) oder einem Smartphone oder dgl., das Problem, dass die Größe des mobilen Endgeräts die Antennentrennung limitiert, so dass die Durchführung eines MIMO-Kommunikationsverfahrens nicht möglich ist.

Es ist daher Aufgabe der vorliegenden Erfindung, ein Verfahren zum Übertragen von Daten in einem Kommunikationssystem, insbesondere einem MIMO (Multiple Input Multiple Output)-Kommunikationssystem, anzugeben, welches die bei der Durchführung eines SIMO-, MISO- oder MIMO-Verfahrens erzielbaren Vorteile auch in einem Kommunikationssystem mit mobilen Endgeräten ermöglicht. Es ist ferner Aufgabe der vorliegenden Erfindung ein derartiges Kommunikationssystem sowie ein Endgerät, insbesondere ein mobiles Endgerät, zu schaffen, welche die Durchführung eines SIMO-, MISO- oder MIMO-Verfahrens bzw. Teilnahme an einem SIMO-, MISO- oder MIMO-Verfahren erlauben.

Diese Aufgaben werden mit den Merkmalen der unabhängigen Patentansprüche gelöst. Vorteilhafte Ausführungsformen ergeben sich aus den abhängigen Patentansprüchen.

Bei dem erfindungsgemäßen Verfahren zum Übertragen von Daten zwischen einem ersten Teilnehmer und einem zweiten Teilnehmer in einem Kommunikationssystem, in welchem der erste Teilnehmer zumindest eine Antenne aufweist, die mit einer ersten Verarbeitungseinheit gekoppelt ist, und der zweite Teilnehmer zumindest eine Antenne aufweist, die mit einer zweiten Verarbeitungseinheit gekoppelt ist, wird zumindest ein Teil der zu übertragenden Daten über einen ersten Kommunikationspfad gemäß einem ersten Datenübertragungsverfahren übertragen, welcher direkt zwischen dem ersten Teilnehmer und dem zweiten Teilnehmer verläuft. Zumindest ein Teil der zu übertragenden Daten wird über zumindest einen zweiten Kommunikationspfad gemäß einem ersten und einem zweiten Datenübertragungsverfahren übertragen, wobei der zweite Kommunikationspfad einen, zwischen dem ersten Teilnehmer und dem zweiten Teilnehmer zwischengeschalteten dritten Teilnehmer umfasst, wobei der dritte Teilnehmer zumindest eine Antenne aufweist. Der zweite Teilnehmer und der zumindest eine dritte Teilnehmer schließen sich zu einem Antennenverbund in dem Kommunikationssystem zusammen, wobei die zweite Verarbeitungseinheit des zweiten Teilnehmers eine gemeinsame zweite Verarbeitungseinheit des Antennenverbunds bildet. Dabei werden das erste Datenübertragungsverfahren und das zweite Datenübertragungsverfahren unterschiedlich gewählt.

Ein erfindungsgemäßes Kommunikationssystem zum Übertragen von Daten zwischen einem ersten Teilnehmer und einem zweiten Teilnehmer in einem Kommunikationssystem umfasst die folgenden Merkmale: der erste Teilnehmer weist zumindest eine Antenne auf, die mit einer ersten Verarbeitungseinheit gekoppelt ist. Der zweite Teilnehmer weist zumindest eine Antenne auf, die mit einer zweiten Verarbeitungseinheit gekoppelt ist, wobei der zweite Teilnehmer dazu ausgebildet ist, sich mit zumindest einem dritten Teilnehmer, welcher zumindest eine Antenne aufweist, zu einem Antennenverbund in dem Kommunikationssystem zusammenzuschließen, wobei die zweite Verarbeitungseinheit des zweiten Teilnehmers eine gemeinsame zweite Verarbeitungseinheit des Antennenverbunds bildet. Das Kommunikationssystem ist dazu ausgebildet, zumindest einen Teil der zu übertragenden Daten über einen ersten Kommunikationspfad gemäß einem ersten Datenübertragungsverfahren zu übertragen, wobei der erste Kommunikationspfad direkt zwischen dem ersten Teilnehmer und dem zweiten Teilnehmer verläuft. Das Kommunikationssystem ist weiter dazu ausgebildet, zumindest einen Teil der zu übertragenden Daten über zumindest einen zweiten Kommunikationspfad gemäß einem ersten und einem zweiten Datenübertragungsverfahren zu übertragen, wobei der zweite Kommunikationspfad den, zwischen dem ersten Teilnehmer und dem zweiten Teilnehmer, zwischengeschalteten dritten Teilnehmer umfasst, und das erste Datenübertragungsverfahren und das zweite Datenübertragungsverfahren unterschiedlich auszuwählen.

Ein erfindungsgemäßes Endgerät, insbesondere ein mobiles Endgerät, wie z.B. ein Mobilfunktelefon, ein Smartphone oder ein PDA, für die Übertragung von Daten mit einem ersten Teilnehmer eines Kommunikationssystems weist zumindest eine Antenne auf, die mit einer Verarbeitungseinheit gekoppelt ist. Das Endgerät ist dazu ausgebildet, sich mit zumindest einem dritten Teilnehmer, welcher zumindest eine Antenne aufweist, zu einem Antennenverbund in dem Kommunikationssystem zusammenzuschließen, wobei die Verarbeitungseinheit des Endgeräts eine gemeinsame Verarbeitungseinheit des Antennenverbunds bildet. Es ist dazu ausgebildet, zumindest einen Teil der zu übertragenden Daten über einen ersten Kommunikationspfad gemäß einem ersten Datenübertragungsverfahren zu übertragen, wobei der erste Kommunikationspfad direkt zwischen dem ersten Teilnehmer und dem Endgerät verläuft. Es ist weiter dazu ausgebildet, zumindest einen Teil der zu übertragenden Daten über zumindest einen zweiten Kommunikationspfad gemäß einem zweiten Datenübertragungsverfahren zu übertragen, wobei der zweite Kommunikationspfad den, zwischen dem ersten Teilnehmer und dem Endgerät, zwischengeschalteten dritten Teilnehmer umfasst, und das erste Datenübertragungsverfahren und das zweite Datenübertragungsverfahren unterschiedlich auszuwählen.

Der Erfindung liegt der Grundgedanke zugrunde, dass sich der zweite Teilnehmer des Kommunikationssystems, z.B. eines MIMO-Kommunikationssystems, zusammen mit einem oder mehreren dritten Teilnehmern, bei denen es sich ebenfalls um mobile Engeräte handeln kann, zu einem Antennenverbund oder -array zusammenschließt. Hierbei verhält sich der Verbund an zweiten und dritten Teilnehmern gegenüber dem ersten Teilnehmer wie "ein" Teilnehmer, der eine Mehrzahl an Antennen aufweist. Damit ist die Durchführung der im Rahmen von SIMO-, MISO- und MIMO-Kommunikationssystemen bekannten Datenübertragungsverfahren und die Ausnutzung derer Vorteile auf einfache Weise möglich. Insbesondere wird eine Möglichkeit geschaffen, wie Teilnehmer, die lediglich über eine einzige Antenne verfügen, auf Basis der Übertragungsverfahren von SIMO-, MISO- oder MIMO-Kommunikationssystemen arbeiten können. Insbesondere ist das Erfordernis einer ausreichenden Distanz zwischen den einzelnen Antennen des Antennenverbunds gewährleistet.

Bevorzugt wird als zweites Datenübertragungsverfahren ein Datenübertragungsverfahren verwendet, welches für kurze Reichweiten im Bereich bis maximal 10 bis 50 m optimiert ist. Hierdurch ergibt sich der Vorteil, dass zwischen dem zweiten Teilnehmer und dem zumindest einen dritten Teilnehmer ein Datenaustausch mit hoher Bandbreite erfolgen kann. Damit können insbesondere auch Datenübertragungsverfahren eingesetzt werden, welche weniger "robust" als Datenübertragungsverfahren sind, welche die lange Distanz zu dem ersten Teilnehmer überbrücken müssen. Insbesondere kommen damit solche Datenübertragungsverfahren in Betracht, welche schwächer ausgebildete Redundanzalgorithmen aufweisen.

Beim sog. Uplink, bei dem die Datenübertragung von dem zweiten Teilnehmer zu dem ersten Teilnehmer erfolgt, überträgt der zweite Teilnehmer die zu übertragenden Daten an den oder die dritten Teilnehmer gemäß dem zweiten Datenübertragungsverfahren. Hierbei können die Daten, wie vorstehend beschrieben, aufgrund des für kurze Distanzen optimierten Datenübertragungsverfahrens mit hoher Bandbreite an die dritten Teilnehmer übertragen werden. Dabei können die zu übertragenden Daten von dem zweiten Teilnehmer vollständig an den oder die dritten Teilnehmer übertragen werden. Die Übertragung kann durch einen sog. Broadcast erfolgen. Alternativ teilt der zweite Teilnehmer die zu übertragenden Daten in Abschnitte auf und überträgt jeweils zumindest einen der Abschnitte an den oder die dritten Teilnehmer. Je nach dem, auf welche Weise der zweite Teilnehmer die zu übertragenden Daten an den oder die dritten Teilnehmer überträgt, kann dann ein Verfahren gemäß "Spatial Diversity" oder "Spatial Multiplexing" durchgeführt werden. In jedem Fall erfolgt die Übertragung gemäß dem zweiten Datenübertragungsverfahren.

Der oder die dritten Teilnehmer empfangen Daten des zweiten Teilnehmers und übertragen diese gemäß dem ersten Datenübertragungsverfahren an den ersten Teilnehmer. Das erste Datenübertragungsverfahren ist hierbei für die Überbrückung von größeren Distanzen, z.B. zu einer Basisstation, optimiert. Aufgrund des im Rahmen des ersten Datenübertragungsverfahrens gewählten Kodierungsalgorithmus kann die Datenübertragung mit einer hohen Redundanzsicherheit erfolgen.

Es kann gemäß einer weiteren Ausführungsform vorgesehen sein, dass vor dem weiteren Übertragen der Daten durch den oder die dritten Teilnehmer eine Verarbeitung der Daten durch den oder die dritten Teilnehmer erfolgt. Die Verarbeitung betrifft insbesondere die für die zu verwendenden Datenübertragungsverfahren notwendigen Bearbeitungsschritte.

Beim sog. Downlink, bei dem von dem ersten Teilnehmer Daten an den zweiten Teilnehmer gesendet werden, empfangen der zweite und der oder die dritten Teilnehmer von dem ersten Teilnehmer übertragene Daten gemäß dem ersten Datenübertragungsverfahren. Es ist dabei vorgesehen, dass der oder die dritten Teilnehmer die empfangenen Daten an den zweiten Teilnehmer gemäß dem zweiten Datenübertragungsverfahren übertragen. Die Übertragung kann damit wiederum mit großer Bandbreite an den zweiten Teilnehmer, den eigentlichen bestimmungsgemäßen Empfänger der Daten, erfolgen. Der zweite Teilnehmer verarbeitet alle an den zweiten Teilnehmer übertragenen Daten in der zweiten Verarbeitungseinheit als gemeinsame zweite Datenverarbeitungseinheit des durch den zweiten und den zumindest einen dritten Teilnehmer gebildeten Antennenverbunds.

Als zweites Datenübertragungsverfahren kommt prinzipiell jedes Datenübertragungsverfahren in Betracht, mit welchem eine hohe Bandbreite bei kurzen Reichweiten erzielbar ist. Insbesondere kann das zweite Datenübertragungsverfahren auf einem der Standards WLAN (Wireless Local Area Network) oder Bluetooth basieren.

Es ist auch möglich, dass das erste und das zweite Datenübertragungsverfahren auf der gleichen Übertragungstechnologie basieren, jedoch ein unterschiedliches Kodierungsverfahren verwendet wird. Über das Kodierungsverfahren kann beispielsweise bestimmt werden, mit welcher Redundanz die Daten an den Empfänger übertragen werden. Danach bestimmt sich auch die maximal zu erreichende Bandbreite.

Die Datenübertragung über den ersten und den zweiten Kommunikationspfad erfolgt gemäß einer weiteren Ausführungsform zumindest teilweise drahtlos.

Die Erfindung lässt sich nicht nur für die Verwendung von Mobilfunkendgeräten, welche in der Regel über lediglich eine einzige Antenne verfügen, anwenden, sondern kann auch bei solchen Basisstationen zum Einsatz kommen, welche über nur eine Antenne verfügen. Die Bildung eines Antennenverbunds oder -arrays kann dann durch miteinander vernetzte Basisstationen erfolgen. Die Vernetzung kann hierbei drahtlos oder drahtgebunden, z.B. über Glasfaserkabel, erfolgen.

Mit dem erfindungsgemäßen Kommunikationssystem sind die gleichen Vorteile verbunden, welche vorstehend in Verbindung mit dem erfindungsgemäßen Verfahren erläutert wurden. Insbesondere ist das Kommunikationssystem weiter dazu ausgebildet, die bereits beschriebenen Verfahrensschritte durchzuführen.

In einer konkreten Realisierung kann der erste Teilnehmer eine Basisstation sein. Der zweite Teilnehmer kann durch ein Endgerät, insbesondere durch ein Mobilfunkendgerät, gebildet sein. Der dritte Teilnehmer kann ein Endgerät, insbesondere ein mobiles Endgerät oder ein stationäres Endgerät, wie z.B. ein Router oder dgl., sein.

Die Erfindung wird nachfolgend näher anhand der Figuren erläutert. Es zeigen:
- Fig. 1: eine Prinzipdarstellung eines aus dem Stand der Technik bekannten MIMO-Kommunikationssystems, und
- Fig. 2: eine schematische Darstellung eines Kommunikationssystems, welche das erfindungsgemäße Verfahren nutzt.

Fig. 2 zeigt in einer schematischen Darstellung eine im Rahmen der vorliegenden Erfindung realisierte Datenübertragung. Eine Basisstation BS bildet einen ersten Teilnehmer des MIMO-Kommunikationssystems. Die Basisstation BS ist in Fig. 2 lediglich schematisch dargestellt und ist konstruktiv wie der in Verbindung mit Fig. 1 beschriebene Sender S aufgebaut. Dies bedeutet mit anderen Worten, er umfasst eine Mehrzahl an Antennen, welche mit einer gemeinsamen ersten Verarbeitungseinheit gekoppelt sind.

Im Ausführungsbeispiel gemäß Fig. 2 soll eine Datenübertragung zwischen der Basisstation BS und einem Endgerät EG als zweiter Teilnehmer durchgeführt werden. Das Endgerät EG ist beispielsweise durch ein Mobilfunkendgerät, ein PDA (Personal Digital Assistant) oder ein sog. Smartphone ausgebildet. Es wird davon ausgegangen, dass das Endgerät EG über lediglich eine einzige Antenne verfügt, was jedoch nicht zwingend ist.

Um eine effektive Datenübertragung zwischen dem Endgerät EG und der Basisstation BS zu ermöglichen, werden als dritte Teilnehmer Endgeräte VG1, VG2, VG3 und VG4 in der näheren Umgebung des Endgeräts EG in die Kommunikation miteinbezogen. Die Endgeräte VG1 bis VG4 stellen beispielsweise ebenfalls Mobilfunkendgeräte mit jeweils einer einzigen Antenne dar. Die Anzahl vier an dritten Teilnehmern ist lediglich beispielhaft gewählt. Prinzipiell kann eine beliebige Anzahl an dritten Teilnehmern in den Kommunikationsvorgang miteinbezogen werden.

Das Endgerät EG und die Endgeräte VG1, VG2, VG3, VG4 bilden einen Antennenverbund, wobei eine zweite gemeinsame Verarbeitungseinheit durch die Verarbeitungseinheit des Endgeräts EG für die Verarbeitung der zu sendenden oder auch empfangenen Daten bereitgestellt wird. Aus Sicht der Basisstation BS stellen die Endgeräte EG sowie VG1, VG2, VG3, VG4 "einen" Empfänger mit einer Mehrzahl an Antennen dar. Damit lassen sich auf einfache Weise die von MIMO-Kommunikationssystemen bekannten Datenübertragungsverfahren anwenden. Es ist insbesondere möglich, Verfahren nach dem sog. Spatial Diversity oder dem Spatial Multiplexing durchzuführen.

Eine Datenübertragung von dem Endgerät EG an die Basisstation BS, die auch als Uplink bezeichnet wird, kann damit wie folgt durchgeführt werden. Das Endgerät EG möchte Daten an die Basisstation BS übertragen. Zu diesem Zweck überträgt sie gemäß einem zweiten Datenübertragungsverfahren DV2 über einen Kommunikationspfad KP2-1, KP2-2, KP2-3, KP2-4 die zu übertragenden Daten vollständig oder jeweils Blöcke davon an die Endgeräte VG1, VG2, VG3, VG4. Das zweite Datenübertragungsverfahren DV2 ist dabei für kurze Reichweiten im Bereich von maximal 10 bis 50 m optimiert, wodurch die Daten mit einer hohen Bandbreite an die Endgeräte VG1, VG2, VG3, VG4 übertragen werden können. Das Endgerät EG sowie die Endgeräte VG1, VG2, VG3, VG4 übertragen nun parallel auf einem direkten Kommunikationspfad KP1 (zwischen EG und BS) oder dem zweiten Kommunikationspfad KP2-1, KP2-2, KP2-3, KP2-4 die Daten unbearbeitet oder bearbeitet an die Basisstation BS. Die Basisstation BS empfängt nun die parallel übertragenen Daten von räumlich unterschiedlich angeordneten Antennen und kann diese gemäß dem verwendeten Kodierungsverfahren weiterverarbeiten. Auf der Übertragungsstrecke von den Endgeräten EG sowie VG1, VG2, VG3, VG4 kommt dabei ein erstes Datenübertragungsverfahren DV1 zum Einsatz, welches für die Überbrückung langer Distanzen optimiert ist. Im Ergebnis kann auf diese Weise eine höhere Bandbreite erzielt werden, als wenn das Endgerät EG sämtliche Daten direkt an die Basisstation BS senden würde.

Ob als Datenübertragungsverfahren dabei Spatial Diversity oder Spatial Multiplexing angewendet wird, hängt davon ab, wie das Endgerät EG die Daten gemäß dem zweiten Datenübertragungsverfahren an die Endgeräte VG1, VG2, VG3, VG4 überträgt. Wird der komplette Datenstrom jeweils über einen sog. Broadcast an die Endgeräte VG1, VG2, VG3, VG4 übermittelt, so läuft das in dem Kommunikationssystem verwendete Datenübertragungsverfahren nach dem Prinzip des Spatial Diversity ab. Werden die von dem Endgerät EG zu übertragenden Daten hingegen in Abschnitte aufgeteilt und jeweils unterschiedliche Abschnitte an die Endgeräte VG1, VG2, VG3, VG4 übertragen, so erfolgt die weitere Datenübertragung nach den Prinzipien des Spatial Multiplexing.

Die Vorgehensweisen beim Spatial Multiplexing sowie beim Spatial Diversity wurden eingangs kurz angerissen und sind dem Fachmann im Übrigen geläufig, so dass auf eine genauere Beschreibung an dieser Stelle verzichtet wird.

Das Vorsehen von zusätzlichen Sicherheitsmechanismen bei der Datenübertragung gemäß dem erfindungsgemäßen Verfahren ist nicht notwendig, da die Endgeräte VG1, VG2, VG3, VG4 die von dem Endgerät EG übertragene Daten ohnehin empfangen könnten. Die Bandbreite, die zwischen dem Endgerät EG und den Endgeräten VG1, VG2, VG3, VG4 benötigt wird, muss nicht notwendigerweise groß sein. Das Endgerät EG hat lediglich die zu übertragenden Daten und ggf. bestimmte Steuerdaten (wie z.B. den Vektor einer Signalverzögerung, usw.) zu den Nachbar-Endgeräten VG1, VG2, VG3, VG4 zu übertragen.

Bei einer Datenübertragung von der Basisstation BS an den Antennenverbund aus Endgerät EG und in Endgeräten VG1, VG2, VG3, VG4 empfangen alle genannten Endgeräte das von der Basisstation BS übertragene Datensignal. Dieses Signal, einschließlich der vollständigen Phaseninformation, wird von den Endgeräten VG1, VG2, VG3, VG4 zu dem Bestimmungsknoten, dem Endgerät EG, weitervermittelt bzw. übertragen. Aus diesen Informationen ist das Endgerät EG in der Lage, die MIMO-Effekte zu ermitteln und den übertragenen Datenstrom zu rekonstruieren. Die Datenübertragung des empfangenen Datenstroms von den Endgeräten VG1, VG2, VG3, VG4 zu dem Endgerät EG kann dabei parallel oder auch zeitversetzt erfolgen. Hierbei müssen weiterhin die bereits erwähnten Phaseninformationen zum Endgerät EG übermittelt werden.

Die Erfindung ermöglicht insbesondere eine wesentliche Verbesserung der Datenübertragung im sog. Uplink in mobilen Kommunikationssystemen. Damit können gegenwärtig bestehende Bedürfnisse in Verbindung mit Multimedia-Übertragungen, wie z.B. Videokonferenzen, berücksichtigt werden, bei denen bislang die Datenübertragung Uplink den Flaschenhals des Kommunikationssystems darstellt. Der Downlink ist weniger kritisch, da die Basisstation über eine leistungsstarke Signalverarbeitung als auch über eine hohe Sendeleistung verfügen.

Die Erfindung lässt sich in vielerlei verschiedenen Anwendungen einsetzen. Insbesondere kommen Massentransportmittel, wie z.B. Züge oder Flugzeuge, Messen oder Ausstellungen in Betracht, bei denen sich eine große Anzahl an mobilen Endgeräten in räumlicher Nähe zueinander befinden. Da die Mehrzahl der dort verfügbaren Endgeräte sich in einem Ruhezustand befinden, können diese ohne Weiteres in Übertragungsprozesse, wie dies oben beschrieben wurde, einbezogen werden. Aufgrund der großen Beabstandung der einzelnen Antennen des Antennenverbundes weist der Antennenverbund gute Eigenschaften auf, wodurch hohe Verstärkungen bei der Signalverarbeitung gemäß MIMO-Verfahren resultieren. Die verbesserte Signalqualität erlaubt die Übertragung von höheren Datenraten, ohne die Notwendigkeit, die Dichte von Basisstationen zu erhöhen.

## Patentansprüche

1. Verfahren zum Übertragen von Daten zwischen einem ersten Teilnehmer (BS) und einem zweiten Teilnehmer (EG) in einem Kommunikationssystem, wobei der erste Teilnehmer (BS) zumindest eine Antenne aufweist, die mit einer ersten Verarbeitungseinheit gekoppelt ist, und der zweite Teilnehmer (EG) zumindest eine Antenne aufweist, die mit einer zweiten Verarbeitungseinheit gekoppelt ist, bei dem
- zumindest ein Teil der zu übertragenden Daten über einen ersten Kommunikationspfad gemäß einem ersten Datenübertragungsverfahren übertragen wird, welcher direkt zwischen dem ersten Teilnehmer (BS) und dem zweiten Teilnehmer (EG) verläuft,
- zumindest ein Teil der zu übertragenden Daten über zumindest einen zweiten Kommunikationspfad gemäß einem ersten und einem zweiten Datenübertragungsverfahren übertragen wird, wobei der zweite Kommunikationspfad einen, zwischen dem ersten Teilnehmer (BS) und dem zweiten Teilnehmer (EG), zwischengeschalteten dritten Teilnehmer (VGi) umfasst, wobei der dritte Teilnehmer (VGi) zumindest eine Antenne aufweist,
- sich der zweite Teilnehmer (EG) und der zumindest eine dritte Teilnehmer (VGi) zu einem Antennenverbund in dem Kommunikationssystem zusammenschließen, wobei die zweite Verarbeitungseinheit des zweiten Teilnehmers (EG) eine gemeinsame zweite Verarbeitungseinheit des Antennenverbunds bildet,
- das erste Datenübertragungsverfahren und das zweite Datenübertragungsverfahren unterschiedlich gewählt werden.

2. Verfahren nach Anspruch 1,
bei dem als zweites Datenübertragungsverfahren ein Datenübertragungsverfahren verwendet wird, das für kurze Reichweiten im Bereich bis maximal 10 bis 50 Meter optimiert ist.

3. Verfahren nach Anspruch 1 oder 2,
bei dem der zweite Teilnehmer (EG) die zu übertragenden Daten an den oder die dritten Teilnehmer (VGi) gemäß dem zweiten Datenübertragungsverfahren überträgt.

4. Verfahren nach Anspruch 3,
bei dem der zweite Teilnehmer (EG) die zu übertragenden Daten vollständig an den oder die dritten Teilnehmer (VGi) überträgt.

5. Verfahren nach Anspruch 3,
bei dem der zweite Teilnehmer (EG) die zu übertragenden Daten in Abschnitte aufteilt und jeweils zumindest einen der Abschnitte an den oder die dritten Teilnehmer (VGi) überträgt.

6. Verfahren nach einem der Ansprüche 3 bis 5,
bei dem der oder die dritten Teilnehmer (VGi) Daten des zweiten Teilnehmers (EG) empfangen und diese gemäß dem ersten Datenübertragungsverfahren an den ersten Teilnehmer (BS) übertragen.

7. Verfahren nach einem der Ansprüche 3 bis 6,
bei dem vor dem weiteren Übertragen der Daten durch den oder die dritten Teilnehmer (VGi) eine Verarbeitung der Daten durch den oder die dritten Teilnehmer erfolgt.

8. Verfahren nach einem der vorherigen Ansprüche,
bei dem der zweite und der oder die dritten Teilnehmer (EG, VGi) von dem ersten Teilnehmer (BS) übertragene Daten gemäß dem ersten Datenübertragungsverfahren empfangen.

9. Verfahren nach Anspruch 8,
bei dem der oder die dritten Teilnehmer (VGi) die empfangenen Daten an den zweiten Teilnehmer (EG) gemäß dem zweiten Datenübertragungsverfahren übertragen.

10. Verfahren nach Anspruch 9,
bei dem der zweite Teilnehmer (EG) alle an den zweiten Teilnehmer (EG) übertragenen Daten in der zweiten Verarbeitungseinheit als gemeinsame zweite Datenverarbeitungseinheit verarbeitet.

11. Verfahren nach Anspruch 8 oder 9,
bei dem das zweite Datenübertragungsverfahren auf einem der Standards WLAN (Wireless Lokal Area Network) oder Bluetooth basiert.

12. Verfahren nach einem der vorherigen Ansprüche,
bei dem das erste und das zweite Datenübertragungsverfahren auf der gleichen Übertragungstechnologie basieren, aber ein unterschiedliches Codierungsverfahren verwendet wird.

13. Verfahren nach einem der vorherigen Ansprüche,
bei dem die Datenübertragung über den ersten und den zweiten Kommunikationspfad zumindest teilweise drahtlos erfolgt.

14. Kommunikationssystem zum Übertragen von Daten zwischen einem ersten Teilnehmer (BS) und einem zweiten Teilnehmer (EG), wobei
- der erste Teilnehmer (BS) zumindest eine Antenne aufweist, die mit einer ersten Verarbeitungseinheit gekoppelt ist,
- der zweite Teilnehmer (EG) zumindest eine Antenne aufweist, die mit einer zweiten Verarbeitungseinheit gekoppelt ist, wobei der zweite Teilnehmer (EG) dazu ausgebildet ist, sich mit zumindest einem dritten Teilnehmer (VGi), welcher zumindest eine Antenne aufweist, zu einem Antennenverbund in dem Kommunikationssystem zusammenzuschließen, wobei die zweite Verarbeitungseinheit des zweiten Teilnehmers (EG) eine gemeinsame zweite Verarbeitungseinheit des Antennenverbunds bildet,
- das Kommunikationssystem dazu ausgebildet ist,
-- zumindest einen Teil der zu übertragenden Daten über einen ersten Kommunikationspfad gemäß einem ersten Datenübertragungsverfahren zu übertragen, wobei der erste Kommunikationspfad direkt zwischen dem ersten Teilnehmer (BS) und dem zweiten Teilnehmer (EG) verläuft,
-- zumindest einen Teil der zu übertragenden Daten über zumindest einen zweiten Kommunikationspfad gemäß einem ersten und einem zweiten Datenübertragungsverfahren zu übertragen, wobei der zweite Kommunikationspfad den, zwischen dem ersten Teilnehmer (BS) und dem zweiten Teilnehmer (EG), zwischengeschalteten dritten Teilnehmer (VGi) umfasst, und
-- das erste Datenübertragungsverfahren und das zweite Datenübertragungsverfahren unterschiedlich auszuwählen.

15. Kommunikationssystem nach Anspruch 14,
**dadurch gekennzeichnet, dass**
dieses weiter dazu ausgebildet ist, die Verfahrensschritte nach einem der Ansprüche 2 bis 13 durchzuführen.

16. Kommunikationssystem nach Anspruch 14 oder 15,
**dadurch gekennzeichnet, dass**
der erste Teilnehmer (BS) eine Basisstation ist.

17. Kommunikationssystem nach einem der Ansprüche 14 bis 16,
**dadurch gekennzeichnet, dass**
der zweite Teilnehmer (EG) ein Endgerät, insbesondere ein Mobilfunkendgerät, ist.

18. Kommunikationssystem nach einem der Ansprüche 14 bis 17,
**dadurch gekennzeichnet, dass**
der dritte Teilnehmer (VGi) ein Endgerät, insbesondere ein mobiles Endgerät, oder ein stationäres Endgerät (Router o.ä.) ist.

19. Kommunikationssystem nach einem der Ansprüche 14 bis 18,
**dadurch gekennzeichnet, dass**
dieses ein MIMO (Multiple Input Multiple Output)-Kommunikationssystem ist, in dem der erste Teilnehmer (BS) eine Mehrzahl an Antennen aufweist, die mit einer gemeinsamen ersten Verarbeitungseinheit gekoppelt ist.

20. Endgerät (EG), insbesondere mobiles Endgerät, für die Übertragung von Daten mit einem ersten Teilnehmer (BS) eines Kommunikationssystems, wobei das Endgerät (EG) zumindest eine Antenne aufweist, die mit einer Verarbeitungseinheit gekoppelt ist, wobei das Endgerät (EG) dazu ausgebildet ist,
- sich mit zumindest einem dritten Teilnehmer (VGi), welcher zumindest eine Antenne aufweist, zu einem Antennenverbund in dem Kommunikationssystem zusammenzuschließen, wobei die Verarbeitungseinheit des Endgeräts (EG) eine gemeinsame Verarbeitungseinheit des Antennenverbunds bildet,
- zumindest einen Teil der zu übertragenden Daten über einen ersten Kommunikationspfad gemäß einem ersten Datenübertragungsverfahren zu übertragen, wobei der erste Kommunikationspfad direkt zwischen dem ersten Teilnehmer (BS) und dem Endgerät (EG) verläuft,
- zumindest einen Teil der zu übertragenden Daten über zumindest einen zweiten Kommunikationspfad gemäß einem zweiten Datenübertragungsverfahren zu übertragen, wobei der zweite Kommunikationspfad den, zwischen dem ersten Teilnehmer (BS) und dem Endgerät (EG), zwischengeschalteten dritten Teilnehmer (VGi) umfasst,
- das erste Datenübertragungsverfahren und das zweite Datenübertragungsverfahren unterschiedlich auszuwählen.
